# EUROPEAN PATENT APPLICATION

(11) **EP 1 609 515 A1**
(43) Date of publication of application: **28.12.2005**
(21) Application number: 05253757.8
(22) Date of filing: 16.06.2005
(51) Int. Cl.: A63F 13/12

(54) **Online game irregularity detection method**

(30) Priority: 23.06.2004 JP 2004185266
(71) Applicant: SEGA CORPORATION, Tokyo 144-8531 (JP)
(72) Inventor: Konuma, Takuji, Tokyo 144-8531 (JP)
(74) Representative: Rees, Alexander Ellison

(57) **Abstract**

In an online game irregularity detection method conducted in an online game system in that a plurality of clients are connected to a game server through a network, a play log showing an execution state of an online game is acquired from a client being a verification target in the plurality of clients, and the play log is verified by reproducing an execution of the online game based on the play log being acquired. Accordingly, it is determined that an illegal act occurs when a first result value shown by the play log is not identical to a second result value obtained by reproducing the execution of the online game as a result from comparing the first result value with the second result value.

## Description

### BACKGROUND OF THE INVENTION

### 1. Field of the Invention

The present invention generally relates to a technology for detecting irregularity during an online game using the Internet.

### 2. Description of the Related Art

Recently, an online game using the Internet has been widely used, and a large number of users (players) join to play the online game.

In practice, an irregular act called "cheating" has been conducted by players for a long time as a part of game mania. Data of a game being in process is intentionally tampered, an item is illegally obtained, or an invincible state is created, and then the game is preceded differently from a normal game. In addition, tools and program codes to cheat the game have been distributed. Thus, these behaviors further cause various irregular acts.

These irregular acts have been widely conducted to not only conventional standalone games, but also online games. Since different from the standalone game, in the online game, a user competes with other users to be a winner, these irregular acts by a part of users gives a strong displeasure to other users who honestly play the game. Then, the online game loses some of users, and an online game business cannot be successful. From the above-described situations, it is important to regulate the irregular acts in the online game.

Online games are categorized into an MO (Multiplayer Online) type allowing the small number of players at the same time and an MMO (Massively Multiplayer Online) type allowing the large number of players at the same time. In general, approximately half process is conducted at a client side in the former MO type, and most of the process is conducted at a server side in the later MMO type. Thus, mainly, the irregular act raises a problem with respect to the former MO type (a program or data in a client can be tampered with to cheat the game), and the irregular act cannot be conducted easily with respect to the later MMO type (the cheating cannot be conducted unless the server is hacked. However, even if the later MMO type, in a case in that an action operation is allowed to game contents, only a server cannot correspond to the action operation due to a scale of data delay in the Internet. Thus, each client is required to share the process. In this case, the irregular act can be conducted.

Conventionally, with respect to these irregular acts, a packet has been encrypted, and the program has been made to be complicated. In detail, the packet is encrypted so that data transmitted through a network are encrypted to make it difficult to analyze what data are transmitted. In addition, the program is made to be complicated so that a file structure and an execution of the process are complicated to make it difficult to analyze contents of the program and the data.

On the other hand, Japanese Laid-open Patent Application No. 9-218851 discloses a technology for automatically detecting and recovering loss of data caused by falsification and an accident of access of the data in a computing network system.

As described above, conventionally, it has been attempted to prevent the irregular act by mainly encrypting the packet and making the program complicated. However, since the process is partially conducted at a user side (by a client computer), it has been impossible to completely prevent the irregular act.

That is, it is possible to make difficult an analysis of what data are transmitted, by encrypting the packet. Even if a higher technological process is conducted to this portion, it is possible to solve a decryption algorithm by analyzing the program at the client side. In addition, when the packet is encrypted, a workload is centralized to the server and a large amount of a cost is required to conduct the process, since the server communicates with all clients.

On the other hand, it can be made it difficult to analyze the contents of the program and the data by complicating the program. However, structures thereof end up to be analyzed and the irregular act can be conducted again soon after the program and the data are complicated. Accordingly, there has been no substantial countermeasure. Moreover, in a case in that the file structure and the execution of the process are made up to be complicated, a development of the game becomes difficult, and a defect of the program is caused.

Programs in the server are maintained in a higher security, and it is impossible to tamper with data without a higher technology such as a hacking. Accordingly, if the entire process is conducted by the server, and if only a process result is displayed at the client, the illegal falsification can be prevented. However, unless the online game uses the network such as the Internet and the like in that the delay of data transmission is greater, and unless information input from each client is sent to the server and information processed by the server is returned to each client for the entire process, it is impossible to realize an action gave requiring immediacy.

The technology described in Japanese Laid-open Patent Application No. 9-218851 subjects the illegal falsification and the like of a database in a business system but does not subject the irregularity of the online game.

That is, in the online game in that various actions are highly expected, a player operates a game character (not limited to a person, but including a robot, a vehicle, and a like) at a real time, and the game character having a position coordinate moves in a virtual three dimensional space. Moreover, there are game characters each being operated by more than one player in the virtual three dimensional space. Accordingly, a larger amount of data beyond comparison with the operation of the database in the business system is processed. Thus, the technology described in Japanese Laid-open Patent Application No. 9-218851 cannot be applied in order to detect the irregularity in the online game.

Moreover, in the online game, in a case in that one frame is drawn on a screen at every 1/60 second or 1/30 second of a vertical blanking interval, within a few frames, an operation input, the entire process is conducted based on data associated to a time within a frame time, such as a game process (movement of each of the game characters, a determination of a collision with other objects in the virtual three dimensional space, and a like), an image generation, an image output to display means, data transmission, and a like. Accordingly, data to be subjected are occurred within an extremely shorter term.

Accordingly, the technology disclosed in Japanese Laid-open Patent Application No. 9-218851 is quite different from a technology being expected from a viewpoint in that an input is not conducted from input operation means (a control pad, a keyboard, a mouse, and a like) every several frames, from a viewpoint in that the game character is moved in the virtual three dimensional space at the multi-frame means, from a viewpoint in that a projection image is not generated in the virtual three dimensional space at the multi-frame means, and in a viewpoint in that an image is not output to the display means at the multi-frame means.

Furthermore, in the database applied in the business system described in Japanese Laid-open Patent Application No. 9-218851, since an intended computing process can be conducted by other alternative clients, instead of its client, a special client is not required intensively and it is simply required to statically monitor a state of the databases. However, in the online game in that the various actions are highly expected, the game processes (the movement of the game characters, the collision determination, and the like) conducted in each client are always required to be subjected. In addition, it is required to monitor the game processes including a fine timing. From this viewpoint, the technology disclosed in Japanese Laid-open Patent Application No. 9-218851 is quite different from the technology being expected in the online game.

### SUMMARY OF THE INVENTION

Accordingly, it is a general object of the present invention to provide online game irregularity detection methods in which one or more of the problems described above are eliminated.

A more specific object of the present invention is to provide an online game irregularity detection method in that an illegal act in the online game can be properly detected and the illegal act can be effectively prevented, instead of encrypting a packet and complicating a program.

The above objects of the present invention are achieved by an online game irregularity detection method conducted in an online game system in that a plurality of clients are connected to a game server through a network, including the steps of: acquiring a play log showing an execution state of the online game from a client being a verification target in the plurality of clients; verifying the play log by reproducing an execution of the online game based on the play log being acquired; and determining that an illegal act occurs when a first result value shown by the play log is not identical to a second result value obtained by reproducing the execution of the online game as a result of comparing the first result value with the second result value.

Moreover, in the online game irregularity detection method, the play log may be verified in the game server.

Furthermore, in the online game irregularity detection method, the play log may be verified by a referential machine, which is separately arranged from the game server.

Moreover, in the online game irregularity detection method, the play log may be verified by one client other than the client being the verification target in the plurality of clients.

Furthermore, in the online game irregularity detection method, the play log may include initial data showing a state of the online game at a start of acquiring the play log, action data showing operation contents of the player within a term of acquiring the play log, and result data showing a state of the game at an end of acquiring the play log.

### BRIEF DESCRIPTION OF THE DRAWINGS

FIG. 1 is a diagram showing a system configuration according to the embodiment of the present invention;
FIG. 2 is a diagram showing an example of contents of the play log according to the embodiment of the present invention;
FIG. 3 is a diagram showing an example of the action according to the embodiment of the present invention;
FIG. 4 is a diagram showing an example of the action data according to the embodiment of the present invention;
FIG. 5 is a diagram showing another example of the action data according to the embodiment of the present invention;
FIG. 6 is a diagram showing an example of a flowchart for explaining an acquisition process of the action data in each client according to the embodiment of the present invention;
FIG. 7 is a diagram showing an internal configuration of the game server in detail according to the embodiment of the present invention;
FIG. 8 is a flowchart for explaining an operation for acquiring the play log according to the embodiment of the present invention; and
FIG. 9 is a flowchart for explaining an operation of the irregularity detection based on the play log according to the embodiment of the present invention.

### DETAILED DESCRIPTION OF THE PREFERED EMBODIMENTS

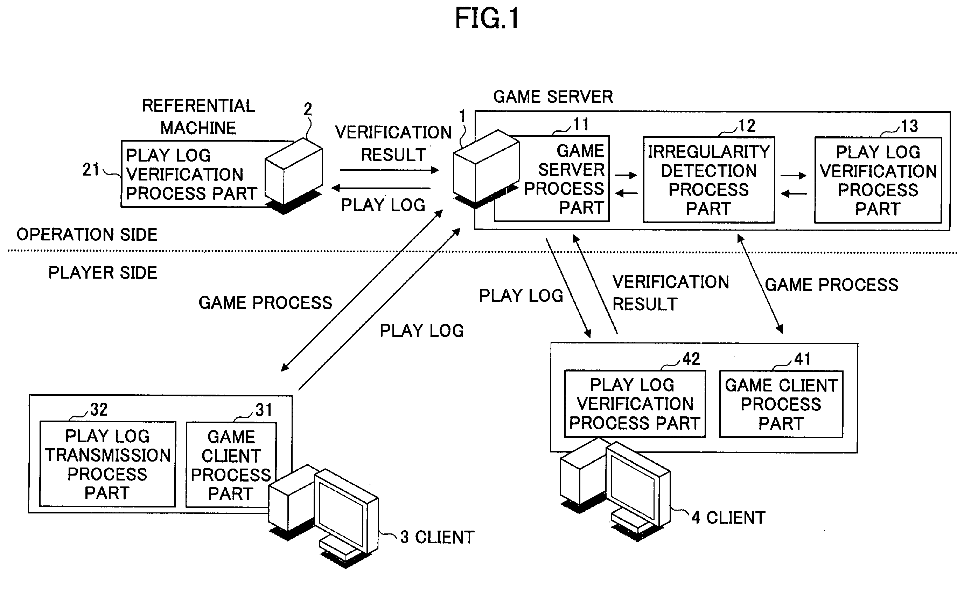

A description will now be given, with reference to FIG. 1 through FIG. 5, of embodiments of the present invention.

An embodiment according to the present invention will be described with reference to the accompanying drawings.

FIG. 1 is a diagram showing a system configuration according to the embodiment of the present invention.

In FIG. 1, at an operation side of an online game, a game server 1 and a referential machine 2 if necessary are arranged. At a player side, a plurality of clients 3 and 4 (only two clients conducting representative operations are shown but more clients can be arranged in practice) are arranged. The game server 1 and the clients 3 and 4 are connected to each other through a network such as the Internet.

The game server 1 includes a game server process part 11 for executing a server process of the regular online game, an irregularity detection process part 12 for detecting an irregularity of a client, and a play log verification process part 13 for verifying a play log as an operation record of a verification target machine for detecting the irregularity. In addition, the referential machine 2 includes a play log verification process part 21 for verifying the play log as the operation record of the verification target machine for verifying the irregularity. It should be noted that the referential machine 2 is a personal computer or a like having the same performance as the client 3 as the verification target machine, and for example, the referential machine 2 mounts the same operating system such as Windows™ as the client 3.

On the other hand, in the client 3 as a verification target at this stage, in addition to a game client process part 31 for executing a client process of the regular online game, a play log transmission process part 32 for obtaining the play log of the client 3 and sending the play log to the game server 1 is dynamically arranged. Moreover, in the client 4 as a verifying machine, in addition to a game client process part 41 for executing the client process of the regular online game, a play log verification process part 42 for verifying the play log as the operation record of the verification target machine in order to detect the irregularity is dynamically arranged. It should be noted that the verification target machine and the verifying machine are appropriately and selectively changed depending on a process of the game server 1.

Also, in FIG. 1, as function parts for verifying the play log as the operation record of the verification target machine in order to verify the irregularity, the play log verification process part 13 in the game server 1, the play log verification process part 21 in the referential machine 2, and the play log verification process part 42 in the client 4 are arranged. It is not required to use all process parts 13, 21, and 42 simultaneously. That is, in a case in that the entire verification of the play log is conducted by the play log verification process part 13 in the game server 1, the referential machine 2 is not required, and also the play log verification process part 42 in the client 4 is not required. Similarly, in a case in that the entire verification of the play log is conducted by the play log verification process part 21 in the referential machine 2 is conducted, the play log verification process part 13 in the game server 1 and the play log verification process part 42 in the client 4 are not required. In a case in that the entire verification of the play log is conducted by the play log verification process part 42 in the client 4, the play log verification process part 13 in the game server 1 and the referential machine 2 itself are not required.

In a case in that the verification of the play log is conducted by the play log verification process part 13 in the game server 1, the game server 1 is generally a machine having higher performance than a personal computer, and is operated by an OS such as UNIX™. Thus, for the verification of the play log, it is required to round an error and to slightly adjust timing between the game server 1 and the client 3. In a case in that the verification of the play log is conducted by the play log verification process part 21 in the referential machine 2 or the play log verification process part 42 in the client 4, advantageously, the program of a client process itself can be executed, since an execution environment similar to that of the client 3 as the verification target is applied.

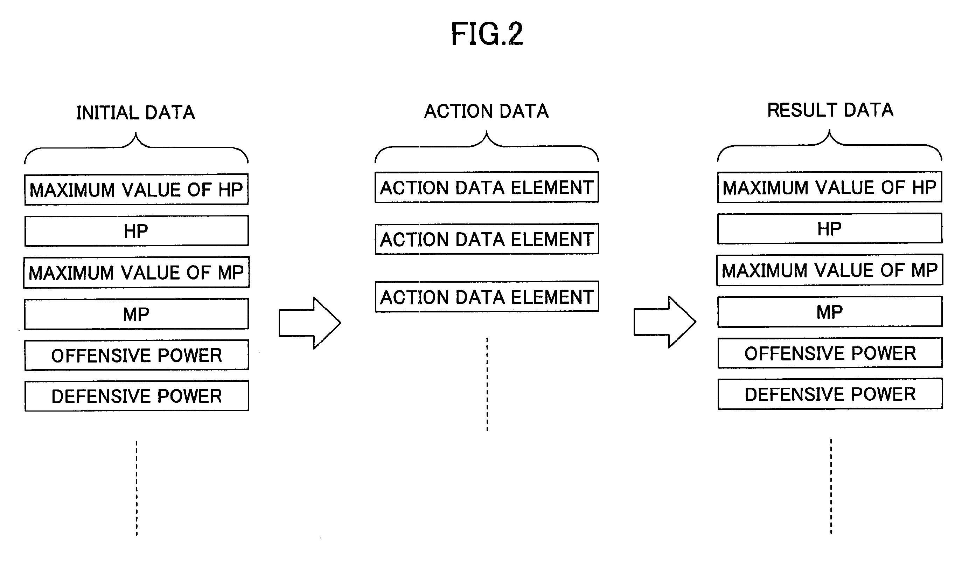

FIG. 2 is a diagram showing an example of contents of the play log according to the embodiment of the present invention. In FIG. 2, the play log includes initial data showing a state of the game at a play log acquisition start time, action data showing operation contents of the player within a play log acquisition term, and result data showing a state of the game at a play log acquisition end. The initial data and the result data include an HP (Hit Point) reduced by a damage caused by an attack from an enemy, a maximum value when the HP is recovered, an MP (Magic Point) consumed when a special action such as a magic or a like is conducted, a maximum value when the MP is recovered, and data for specifying a state at a specific time of the game corresponding to a type of another game. Moreover, the action data includes a plurality of action data elements being associated to time information of the game. Each of the action data elements includes location information of each of the game characters. The location information may be an absolute coordinate value or a movement amount for each frame. When the movement speed is constant, only a movement direction is included as the location information.

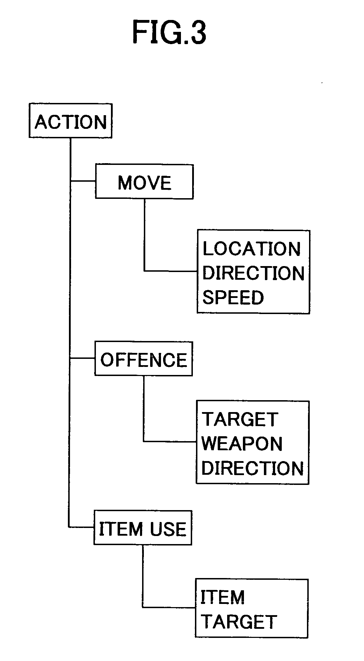

FIG. 3 is a diagram showing an example of the action according to the embodiment of the present invention. In FIG. 3, the action includes operation which the player can indicate, such as a move (including attributes such as a location, a direction, a speed, and a like), an offence (including attributes such as target, a weapon, a direction, and a like), an item use (including attributes such as an item, a target, and a like).

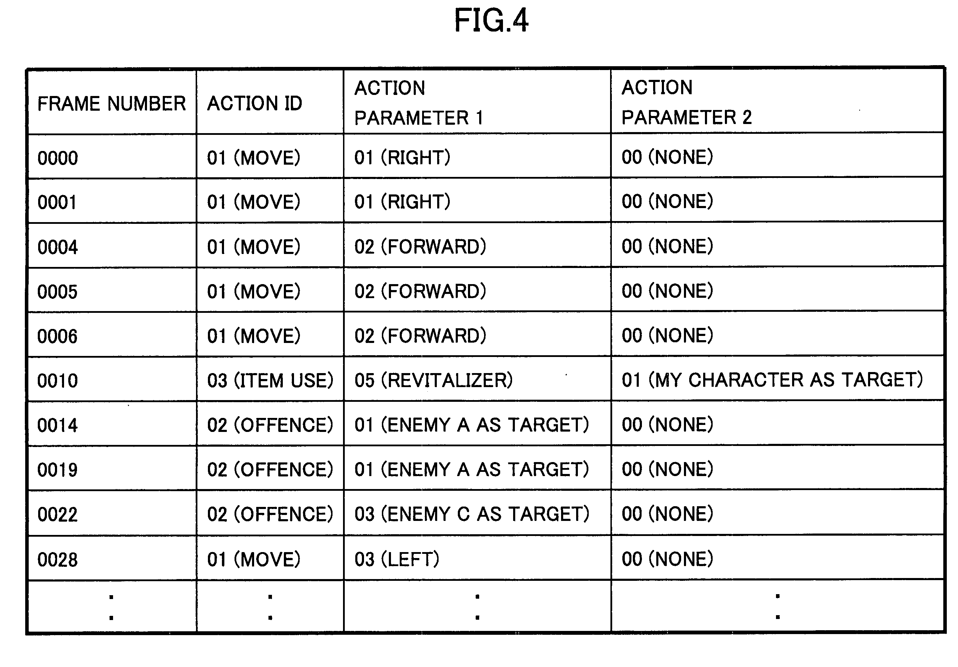

FIG. 4 is a diagram showing an example of the action data according to the embodiment of the present invention. In FIG. 4, one line configures an action data element. In FIG. 4, a case in that only data of a frame in which the action is conducted are recorded is shown. The action data element includes a frame number for identifying a frame, an action ID showing a type of the action, an action parameter 1 showing a content of the action, and an action parameter 2 showing another content of the action. Since the time information of a frame unit is essentially required to identify the frame, instead of the frame number, the time information including second information after the decimal point (for example, 01 hour 23 minutes 45.67 seconds) may be applied. Moreover, the number of the action parameters can be arbitrarily designed, and the action parameters themselves can be omitted (in FIG. 4, when there is no parameter, "00 (none)" is shown). Furthermore, the action ID and the like are shown by numeral data, but character data such as "move" can be used.

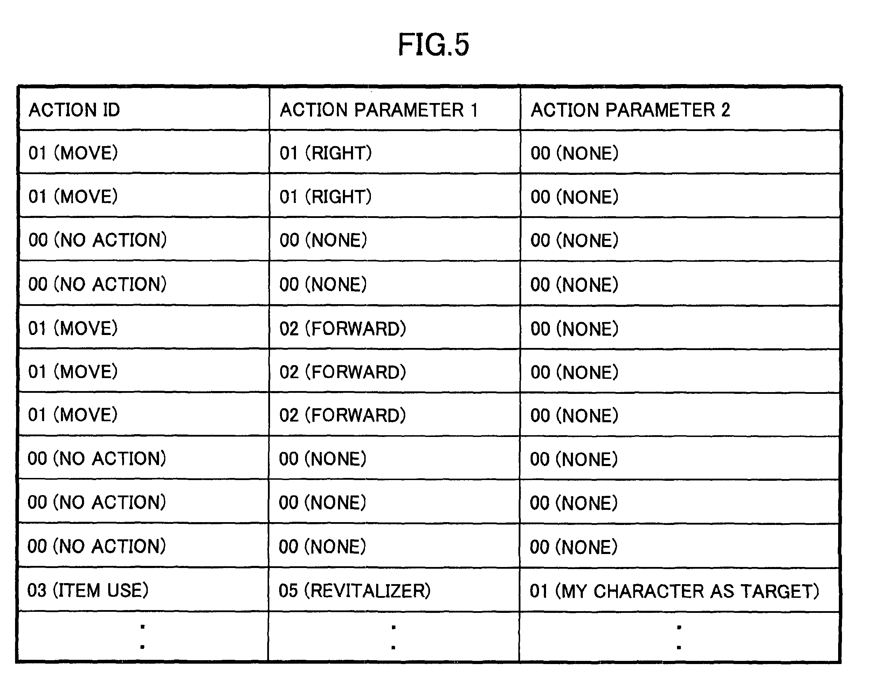

FIG. 5 is a diagram showing another example of the action data according to the embodiment of the present invention. In FIG. 5, this example of the action data shows a case of recording data for each frame. Since frames are aligned in time-series so that it is not necessary to specify a time location for each of the frames, the frame number can be omitted. It should be noted that the frame number can be additionally provided to confirm that there is no data loss.

In this example shown in FIG. 5, a data amount becomes greater than the case of recording only data of the frame in which the action is conducted. However, advantageously, it is possible to automatically record without determining whether or not the action occurs, and also it is possible to easily read it out for the verification.

In a case of sending and receiving the action data through the network, by compressing the action data in accordance with a lossless data compression method such as a run length coding, a Huffman coding, a sliding dictionary method, or a like, a data transmission of the action data can be effectively conducted.

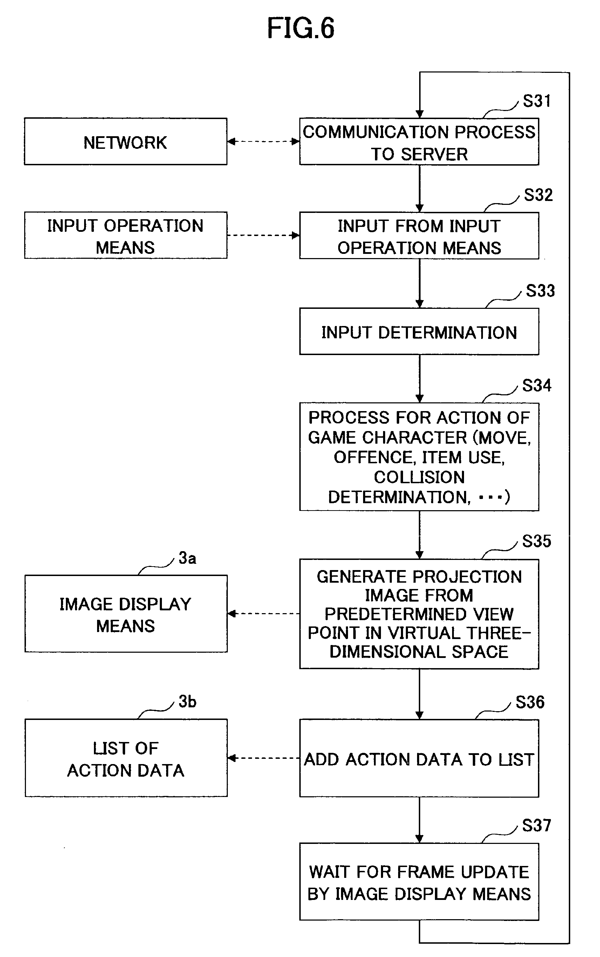

FIG. 6 is a diagram showing an example of a flowchart for explaining an acquisition process of the action data in each client according to the embodiment of the present invention. In FIG. 6, one frame is drawn on a screen at every 1/60 second or 1/30 second of a vertical blanking interval, and a few frames are processed periodically.

First, a communication process to the game server 1 is conducted through the network (step S31). Next, operations of the player are input from the input operation means such as the control pad, the keyboard, the mouse, and the like (step S32), and operation contents being input are determined (step S33).

Next, processes for behaviors of the game characters (the move, the offence, the item use, the collision determination, and the like) are conducted depending on the operation contents being input (step S34). Then, a projection image is generated from a predetermined view point in the virtual three dimensional space (step S35).

After that, the action data showing each of the operation contents is added to a list 3b of the action data (step S36), and the acquisition process waits for a frame update of image display means 3a (step S37). Again, the acquisition process advances to the communication process to the game server 1 (step S31).

In the above-described process example, the communication to the game server 1 (step S31) is conducted at the beginning of the acquisition process, and the action data is added to the list 3b (step S36) at the ending of the acquisition process. However, it is not limited to this order but these steps S31 and S36 can be conducted any time within a periodical process term at the frame unit.

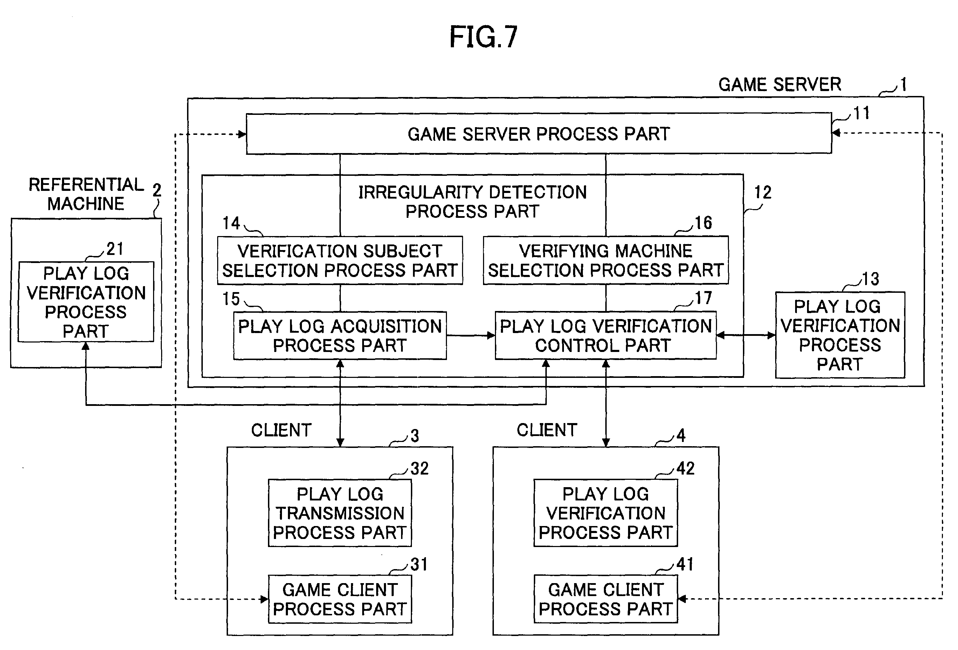

FIG. 7 is a diagram showing an internal configuration of the game server in detail according to the embodiment of the present invention. In FIG. 7, the irregularity detection process part 12 includes an verification target selection process part 14 for acquiring information of each player of the game from the game server process part 11, a play log acquisition process part 15 for acquiring the play log by issuing a command to a play log transmission process part 32 of the client 3 selected as the verification target machine, a verifying machine selection process part 16 for selecting the verifying machine which executes the verification, and a play log verification control part 17 for conducting the verification by sending the play log to the verifying machine being selected. In a case in that the client 4 is selected as the verifying machine to verify the play log, the verifying machine selection process part 16 selects the client 4 to set as the verifying machine from client machines other than the client 3 set as the verification target in client machines of all players of the game.

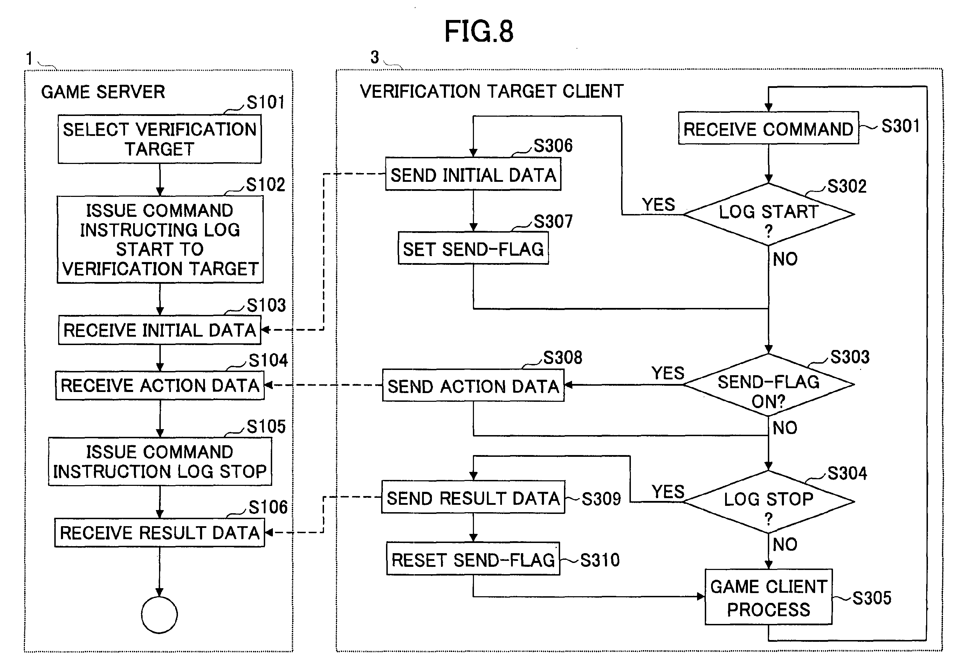

FIG. 8 is a flowchart for explaining an operation for acquiring the play log according to the embodiment of the present invention. In the following, the operation for acquiring the play log will be described according to the embodiment of the present invention.

First, the verification target selection process part 14 in the irregularity detection process part 12 of the game server 1 selects the verification target machine (step S101). The verification target machine may be randomly selected. Alternatively, a specific player, who is suspected of the illegal act, may be selected by higher priority based on prior playing records. Since a purpose is a exposure of a vicious illegal act, it is not required to verify all clients and one or more clients may be randomly verified.

Next, the play log acquisition process part 15 of the game server 1 issues a command instructing a log start to the client 3, which is selected as the verification target (step S102).

When the client 3 loops processes to receive a command (step S301), checks whether or not the received command instructs the log start (step S302), checks whether or not a send-flag is ON (step S303), checks whether or not the received command instructs a log stop (step S304), and conducts a game client process (step S305). When the received command is a command instructing the log start, the play log transmission process part 32 of the client 3 receives data showing a state of the game at a current stage, sends the data as initial data to the play log acquisition process part 15 of the game server 1 (step S306), and sets a send-flag to be ON (step S307). Then, the play log acquisition process part 15 of the game server 1 receives the initial data sent from the client 3 (step S103).

Moreover, after the send-flag set to be ON, the play log transmission process part 32 of the client 3 sends the action data showing an operation of the player to the play log acquisition process part 15 each time the command is received (step S308). The play log acquisition process part 15 of the game server 1 receives the action data (step S104).

On the other hand, after a predetermined time passes, the play log acquisition process part 15 of the game server 1 issues a command instructing the log stop to the client 3 being the verification target (step S105).

When the client 3 receives the command instructing the log stop, the play log transmission process 32 of the client 3 receives data showing the state of the game at the current stage, sends the data as the result data to the play log acquisition process part 15 of the game server 1 (step S309), and resets the send-flag (step S310). Then, the play log acquisition process part 15 of the game server 1 receives the result data sent from the client 3 (step S106). By these processes described above, the play log can be obtained form the verification target machine.

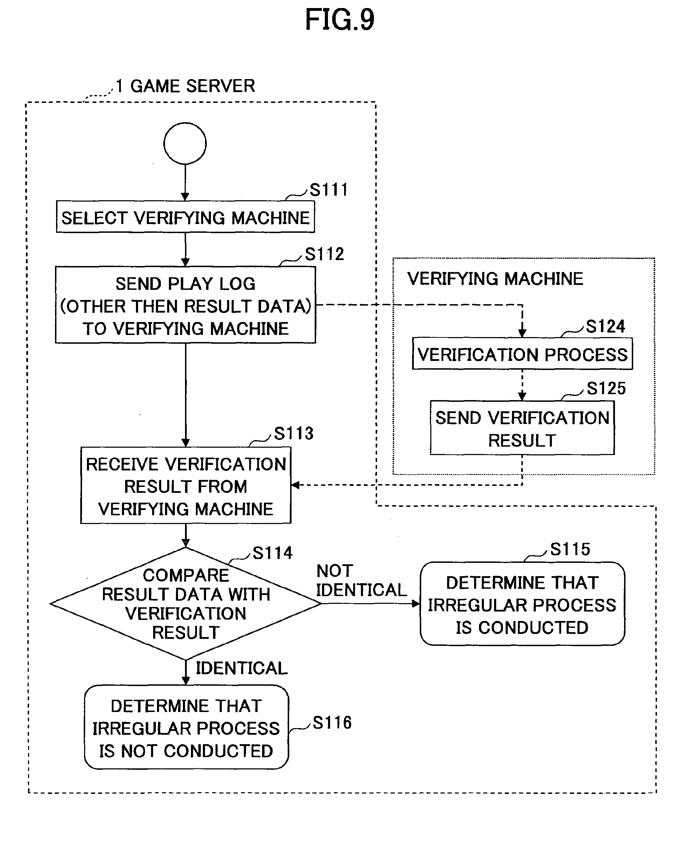

FIG. 9 is a flowchart for explaining an operation of the irregularity detection based on the play log according to the embodiment of the present invention. In the following, the operation of the irregularity detection will be described according to the embodiment of the present invention.

First, the verifying machine selection process part 16 in the irregularity detection process part 12 of the game server 1 selects the verifying machine based on a predetermined rule (step S111). As the verifying machine, it is possible to use the play log verification process part 13 in the game server 1, the play log verification process part 21 in the referential machine 2, and the game client process part 41 in the client 4. In a case of having the client 4 verify the play log, the verifying machine selection process part 16 selects the client 4 to set as the verifying machine from clients other than a client being the verification target in all clients of the players joining the game. The verification target machine and the verifying machine are assigned to different clients 3 and 4, since in the client 3 conducting the illegal act may also conduct a verification process with the illegal act at higher possibility. Also, it is preferable to randomly select the verifying machine so as not to concentrate the verification process at a specific client such as the client 4.

Next, the play log verification control part 17 of the game server 1 sends the initial data and the action data other than the result data from the play log to the verifying machine, and requests the verifying machine of the verification (step S112). When the verifying machine receives the request, the verifying machine conducts the verification process 17 (step S124), and sends the verification result to the play log verification control process 17 of the game server 1 (step S125). That is, the verifying machine executes a regular client game process based on the initial data and the action data which are included in the play log, and the regular client game returns data showing the state of the game at the current stage which is conducted based on the latest action data.

When the play log verification control part 17 of the game server 1 receives the verification result (step S113), the play log verification control part 17 compares the result data of the play log originally received as a verification request with the verification result (step S114). When the result data is not identical to the verification result, it is determined that an irregular process is conducted (step S115). On the other hand, when the result data is identical to the verification result, it is determined that the irregular process is not conducted (step S116). That is, the same client game process is begun from the same initial data, and is executed based on the same action data under the same environment. If the illegal act is conducted, the result data does not become identical to the verification data. Therefore, it is possible to easily detect the illegal act if there is a mismatch between the result data and the verification data.

In a case in that the illegal act is detected, it is technically possible to compulsory end a process of the client 3 conducting the illegal act, or to correct to a proper state. However, as a matter of fact, it is sufficient to warn the player after the illegal act is detected. Therefore, it is not required to conduct the above-described verification process at a real time. Alternatively, the verification process may be conducted at a proper timing after the play log is received.

Moreover, if the illegal act is conducted to tamper contents of the verification process of the client 4, even if the client 3 being the verification target, which is verified by the client 4, does not conduct any illegal act, the client 3 may be suspected of doing the illegal act. Thus, even after the illegal act is detected, instead of determining the client 3 as a client conducting the illegal act, it is preferable to select another client as the verifying machine to conduct the verification process, and then the client actually conducting the illegal act may be determined based another verification result.

In the online game irregularity detection method according to the present invention, the illegal act in the online game can be detected and the illegal act can be effectively prevented without encrypting a packet and complicating a program.

The present invention is not limited to these embodiments, but variations and modifications may be made without departing from the scope of the present invention.

## Claims

1. An online game irregularity detection method conducted in an online game system in that a plurality of clients are connected to a game server through a network, comprising the steps of:
acquiring a play log showing an execution state of an online game from a client (3) being a verification target in the plurality of clients;
verifying the play log by reproducing an execution of the online game based on the play log being acquired; and
determining (S114) that an illegal act occurs when a first result value shown by the play log is not identical to a second result value obtained by reproducing the execution of the online game as a result from comparing the first result value with the second result value.

2. The online game irregularity detection method as claimed in claim 1, wherein the play log is verified in the game server.

3. The online game irregularity detection method as claimed in claim 1, wherein the play log is verified by a referential machine (2), which is separately arranged from the game server.

4. The online game irregularity detection method as claimed in claim 1, wherein the play log is verified by one client (4) other than the client (3) being the verification target in the plurality of clients.

5. The online game irregularity detection method as claimed in claim 1, wherein the play log includes:
initial data showing a state of the online game at a start of acquiring the play log;
action data showing operation contents of the player within a term of acquiring the play log; and
result data showing a state of the game at an end of acquiring the play log.
